# EUROPEAN PATENT SPECIFICATION

(11) **EP 1 552 203 B1**
(45) Date of publication and mention of the grant of the patent: **14.03.2007**
(21) Application number: 02807628.9
(22) Date of filing: 30.09.2002
(51) Int. Cl.: F16L 9/147, F16L 9/153

(54) **SANDWICH PIPES FOR ULTRA-DEEP WATERS**
SANDWICH-ROHRE FÜR ULTRATIEFE GEWASSER
PIPELINES EN SANDWICH POUR EAUX TRES PROFONDES

(30) Priority: 30.07.2002 BR 0203098
(43) Date of publication of application: 13.07.2005
(73) Proprietor: COPPE/UFRJ - COORDENACAO DOS PROGRAMAS DE POS GRADUACAO DE ENGENHARIA DA UNIVERSIDADE FEDERAL DO RIO DE JANEIRO, CEP-21941-590 Ilha do Fundao, RJ (BR)
(72) Inventor: SEGEN FARID, Estefen, CEP-20240-250 Rio de Janeiro, RJ (BR); NETTO, Theodoro, Antoun, CEP-24600-110 Niteroi, RJ (BR); PASQUALINO, Ilson, Paranhos, CEP-24220-091 Niteroi, RJ (BR)
(74) Representative: Johansson, Lars-Erik
(86) International application number: PCT/BR2002/000136
(87) International publication number: WO 2004/011839

(56) References cited:
- WO-A1-96/02785
- US-A- 5 755 265

## Description

### Technical Application

The innovative conception is basically a sandwich rigid pipeline specially designed for the transportation of warmed hydrocarbons or general fluids in ultra-deep waters, see WO-A-96/02 785 in accordance with the preamble of claim 1.

### Technical Review

Pipe-in-pipe conceptions for the transportation of hydrocarbons have been employed in the offshore petroleum industry. In general, such structures are selected with the aim to increase the insulation capacity in relation to single wall pipelines or bundles. The annulus material is dimensioned to reduce the thermal transferring between the exported fluid and the environment while the outer and inner pipes are designed to withstand the combination of internal and external pressure, tension and bending loads. This research project studied different conceptions of sandwich pipes, that fulfill concomitantly both the requirements of mechanical strength and thermal insulation.

### Justification of the Invention

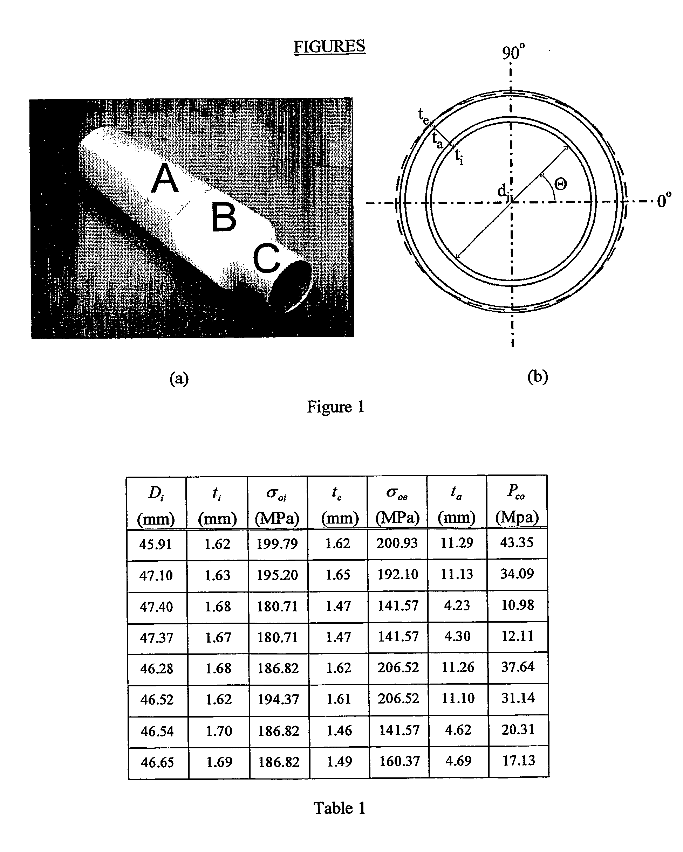

The conception of the sandwich pipe (SP) studied is composed of two concentric steel pipes in which the.annulus is filled with an alternative insulating material. Its geometry is schematically shown in Figure 1 (b), where Dᵢ is the internal diameter of the inner pipe, tᵢ is the inner pipe thickness, tₐ is the annulus thickness and tₑ is the outer pipe thickness.

Sandwich structures composed of an intermediate material with low density, low thermal conductivity and inferior mechanical strength in relation to the outer and inner layers, are feasible alternative conceptions to conventional structures. It can be obtained by combining a thick intermediate layer and thinner adjacent layers with a good adherence among them. The inner and outer layers are designed to provide axial and flexural rigidities, while the intermediate layer must provide adequate thermal insulation, avoid sliding between adjacent layers and keep the inner layer away from the outer during the loading.

Therefore, three different materials were selected to evaluate, through different geometries, the feasibility of sandwich pipes: high strength steel for the inner and outer layers, and cement or polypropylene for the annulus. Due to its mechanical properties, extensive application in the offshore industry and the facilities provided for large scale production in Brazilian industry, the high strength steel was naturally considered for the analyses. The cement was selected because it can be easily manufactured at a low cost, presents relatively low thermal conductivity and high compressive strength. However, it is a fragile material, favorable to nucleation of flaws and crack propagation during the manufacturing process or mainly when subjected to tension loads. On the other hand, the addiction of proper chemical components may increase its toughness. The polypropylene is a hyperelastic material (elongation of approximately 300%) with low thermal conductivity, but an inferior compressive strength in relation to the cement. Furthermore, it is an expensive raw material and requires a sophisticated SP manufacturing process.

Certainly, there are many combinations of materials and geometries that can fulfill the thermal and structural requirements. The overall submerged weight, the raw material availability, the manufacturing cost, the assembling and installation of the SP are some of the main decision factors for the optimized choice of material and dimensions. Although these factors have affected the selection of the studied cases, the results presented in the scope of this project have aimed to prove, in theory, the technical feasibility of the conception for deep and ultra-deep waters, without concern with the optimization of a specific configuration (that would lead to a very peculiar interpretation of the obtained results).

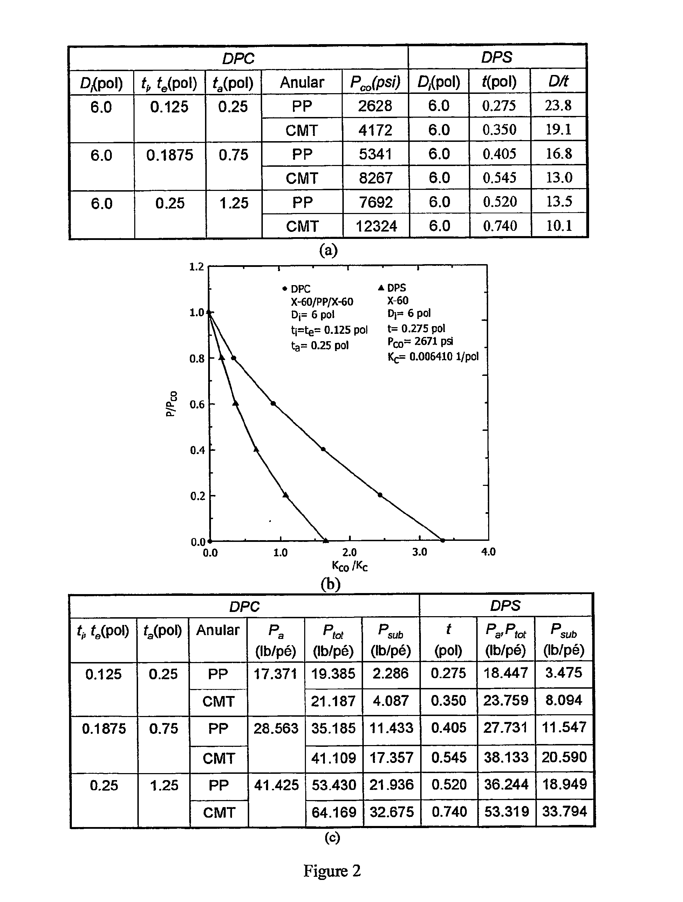

Initially, the study comprised the numerical evaluation of the collapse envelope under combined external pressure and bending load (bending moment and curvature) for different SP configurations. The numerical simulations were carried out with the aid of a nonlinear finite element model incorporating finite plasticity and large rotations. Small-scale models of SP's filled with cement and polypropylene were manufactures and tested under hydrostatic pressure to determine the collapse pressure and the propagation pressure. The obtained results (see Table 1), where σ*ₒᵢ*, σ*ₒₑ* mean the yielding stresses of the inner and outer pipes and *P_{co}* the collapse pressure, were useful to calibrate the numerical model developed, that can be used in the future as a design tool of sandwich pipe's for ultra-deep waters. Finally, a simplified comparative study of the structural performance under combined loading was carried out involving six different configurations of SP and corresponding single wall pipes (see Figure 2), where the table (a) represents the collapse pressures, the graph (b) the collapse envelopes and the table (c) the structural weights.

Besides the increase on the flexural rigidity, obtained through the division of a single wall pipe in two cylindrical shells filled by an alternative material, sandwich pipe configurations are potential solutions for submarine layouts where the thermal insulation is a critical design parameter. The utilization of suitable core materials, which result in equivalent heat transfer coefficients capable to reduce the thermal loss between the mixture oil-gas-water and the environment, can make this conception technically very attractive.

Nevertheless, the evaluation of the required thermal insulation capacity of a pipe is highly dependent on the submarine layout studied (the flowing distances, the well flow, pressure, temperature, etc.). In addition, when thermal insulation requirements are established, the physical properties of the fluid exported (density, viscosity, thermal capacity, thermal conductivity, etc) must be correctly determined. The costs associated to manufacturing, installation, safety and operation are also important parameters to be considered during the design process.

In the research project, the problem was analyzed in a simplified manner under two different approaches. Initially, it was developed a parametric study to analyze the effect of different thickness and the thermal conductivity of the core material on the global heat transfer coefficient obtained analytically. From the assumption that the global heat transfer coefficient required to avoid cooling of the fluid is known, the obtained results make possible to identify the PIP configurations that can attend the design requirements of thermal insulation. Next, it was carried out a theoretical analysis involving the thermal convection of the mixture oil-gas-water and thermal conductivity in the solid structure of the sandwich pipe. From the numerical solution of the state equations, it was possible to obtain the longitudinal temperature profile and to quantify the main design parameters in order to keep proper temperatures of the mixture along the pipeline.

As emphasized before, the study accomplished had no compromise with a specific sandwich pipe layout, since several combinations of material and geometric parameters can attend the same structural and thermal requirements. Nevertheless, the obtained results showed clearly a great potential for the employment of sandwich pipe systems for deep and ultra-deep waters, since it was verified its capacity to attend effectively and concomitantly both thermal and structural design requirements, with no major problems related to operational or manufacturing processes, when compared to conventional pipelines.

### Summary of the Invention

Finally, this invention is concerned with a sandwich pipe (SP), which consists of a multi-layer tubular rigid system, with the required capacity of thermal insulation and structural strength to be used for the transportation of warmed hydrocarbons in ultra-deep waters.

### Detailed Description of the Invention

This invention describes a rigid system of cylindrical shape, with thermal functions and suitable mechanical strength to be installed in ultra-deep waters (beyond 1500 meters) and employed in the transportation of warmed hydrocarbons or other fluids. The invention comprises a composite system with three superposed layers, as described in Figure 1 (a), perspective view of the system, where **A** represents the external layer, **B** the intermediate layer and **C** the internal layer. The external and internal layers are pipes made of metallic alloys, such as the carbon steel, stainless steel, aluminum, titanium, etc. with or without seam (longitudinal weld). At the intermediate layer were considered cement or polypropylene, but may also be used ceramic materials, polymers or composite materials with low thermal conductivity, high mechanical strength and good adherence with the internal and external pipes.

The drawings, tables and the data mentioned above, can not be considered as limitations to the scope of this invention, because it may be represented with more layers and/or different dimensions, depending on the conditions of utilization.

## Claims

1. Sandwich Pipeline for Ultra-Deep Waters comprised of a composite system with three or more superposed layers, **characterized by** one internal layer and one external layer made of metallic alloys, such as carbon steel, stainless steel, aluminum, titanium, etc, and one intermediate layer made of cement, polypropylene, ceramic materials, polymers or composite materials with low thermal conductivity, high mechanical strength and good adherence with the internal and external pipes.

2. Sandwich Pipeline for Ultra-Deep Waters according to the claim 1, **characterized by** the utilization of carbon steel, preferably, in the manufacturing of the external and internal layers.

3. Sandwich Pipeline for Ultra-Deep Waters according to the claims 1 and 2, **characterized by** the utilization of cement, preferably, in the manufacturing of the intermediate layer.

4. Sandwich Pipeline for Ultra-Deep Waters according to the claims 1 and 2, **characterized by** the utilization of polypropylene, preferably, in the manufacturing of the intermediate layer.

5. Sandwich Pipelines for Ultra-Deep Waters, **characterized by** the utilization for the transportation of warmed hydrocarbons or fluids in ultra-deep waters.

6. Sandwich Pipeline for Ultra-Deep Waters according to the claim 1, **characterized by** attending concomitantly both the basic design requirements of mechanical strength and thermal insulation.

## Patentansprüche

1. Mehrschicht-Pipeline für extreme Wassertiefen, umfassend:
ein Verbundsystem mit drei oder mehr übereinander gelagerten Schichten, **gekennzeichnet durch**:
eine innere Schicht und eine äußere Schicht aus Metalllegierungen wie Kohlenstoffstahl, rostfreier Stahl, Aluminium, Titan, etc. und
eine Zwischenschicht aus Zement, Polypropylen, Keramikmaterialien, Polymeren oder Verbundmaterialien mit niedriger Wärmeleitfähigkeit, hoher mechanischer Festigkeit und guter Haftung mit den inneren und äußeren Röhren.

2. Mehrschicht-Pipeline für extreme Wassertiefen gemäß Anspruch 1, **gekennzeichnet durch** die vorzugsweise Verwendung von Kohlenstoffstahl bei der Herstellung der äußeren und inneren Schichten.

3. Mehrschicht-Pipeline für extreme Wassertiefen gemäß den Ansprüchen 1 und 2, **gekennzeichnet durch** die vorzugsweise Verwendung von Zement bei der Herstellung der Zwischenschicht.

4. Mehrschicht-Pipeline für extreme Wassertiefen gemäß den Ansprüchen 1 und 2, **gekennzeichnet durch** die vorzugsweise Verwendung von Polypropylen bei der Herstellung der Zwischenschicht.

5. Mehrschicht-Pipeline für extreme Wassertiefen, **gekennzeichnet durch** die Verwendung für den Transport von erwärmten Kohlenwasserstoffen oder Fluiden in extremen Wassertiefen.

6. Mehrschicht-Pipeline für extreme Wassertiefen gemäß Anspruch 1, **gekennzeichnet durch** gleichzeitiges Beachten sowohl der grundlegenden Konstruktionsanforderungen der mechanischen Festigkeit als auch der thermischen Isolierung.

## Revendications

1. Pipeline en sandwich pour eaux très profondes formé d'un système composite avec trois couches superposées, ou un nombre supérieur, **caractérisé par** une couche interne et une couche externe formées d'alliages métalliques, tel que l'acier au carbone, l'acier inoxydable, l'aluminium, le titane, etc., et une couche intermédiaire formée de cément, de propylène, de matériaux céramiques, de polymères ou de matériaux composites avec une faible conductivité thermique, une résistance mécanique élevée et une bonne adhérence aux conduites internes et externes.

2. Pipeline en sandwich pour eaux très profondes selon la revendication 1, **caractérisé par** l'utilisation d'acier au carbone, de manière préférée, dans la fabrication des couches externes et internes.

3. Pipeline en sandwich pour eaux très profondes selon la revendication 1 et 2, **caractérisé par** l'utilisation de cément, de manière préférée, dans la fabrication de la couche intermédiaire.

4. Pipeline en sandwich pour eaux très profondes selon la revendication 1 et 2, **caractérisé par** l'utilisation de propylène, de manière préférée, dans la fabrication de la couche intermédiaire.

5. Pipeline en sandwich pour eaux très profondes, **caractérisé par** l'utilisation dans le transport d'hydrocarbures ou de fluides chauffés dans des eaux très profondes.

6. Pipeline en sandwich pour eaux très profondes selon la revendication 1, **caractérisé par** le fait de satisfaire de manière concomitante à la fois aux deux exigences basiques de construction que sont la résistance mécanique et l'isolation thermique.
